# EUROPEAN PATENT SPECIFICATION

(11) **EP 4 502 562 B1**
(45) Date of publication and mention of the grant of the patent: **21.01.2026**
(21) Application number: 23188646.6
(22) Date of filing: 31.07.2023
(51) Int. Cl.: G01K 7/01, G01K 7/22, G01K 3/14

(54) **MONITORING A COOLING SYSTEM OF A POWER ELECTRONIC SEMICONDUCTOR DEVICE**
ÜBERWACHUNG EINES KÜHLSYSTEMS EINER LEISTUNGSELEKTRONISCHEN HALBLEITERVORRICHTUNG
SURVEILLANCE D'UN SYSTÈME DE REFROIDISSEMENT D'UN DISPOSITIF À SEMI-CONDUCTEUR ÉLECTRONIQUE DE PUISSANCE

(43) Date of publication of application: 05.02.2025
(73) Proprietor: Airbus S.A.S., 31700 Blagnac (FR)
(72) Inventor: KAPAUN, Florian, 82024 Taufkirchen (DE); STEINER, Gerhard, 82024 Taufkirchen (DE)
(74) Representative: OTN Airbus SAS

(56) References cited:
- US-A1- 2021 396 600
- US-A1- 2022 140 455

## Description

The invention relates to a monitoring method for monitoring a cooling system of a power electronic semiconductor device that includes the cooling system for providing a cooling fluid and at least one semiconductor die including a power switching element. Further, the invention relates to a monitoring unit configured to conduct such a monitoring, a power electronic semiconductor device equipped with such a monitoring unit, and an aircraft with such a power electronic semiconductor device.

The invention relates to the field of power semiconductor electronics with its corresponding cooling system. According to some embodiments of the invention, an electrical switch in form of a power electronic semiconductor device with transistors or other electronic power switching elements on a semiconductor die is meant to replace mechanical switches. The electronic solution has many advantages over the mechanical solution, e.g., with regard to reaction time. Unfortunately, cooling is required due to the higher on state losses of the electrical switch. In order to ensure correct operation, the cooling system (e.g., a proper cooling flow provided thereby) should be monitored with additional sensors.

For technical background, reference is made to the following literatures:
[1] Wikipedia, Power Module, retrieved from https://en.wikipedia.org/w/index.php?title=Power_module&oldid=1103087500 on July 20, 2023
[2] Wikipedia, DC-to-DC Converter, retrieved from https://en.wikipedia.org/w/index.php?title=DC-to-DC_converter&oldid=1142364570 on July 20, 2023
[3] Wikipedia, Switched-mode power supply, retrieved from https://en.wikipedia.org/w/index.php?title=Switched-mode_power_supply&oldid=1164879008 on July 20, 2023

Literatures [1] to [3] describe examples for the power electronics semiconductor devices which are also used in some embodiments of the invention.

Reference is also made to the patent applications US 2022/140455 A1 and US 2021/396600 A1. The former describes a method of measuring coolant temperature in power modules, while the latter describes a method of determining the actual junction temperature of a power device based on on-state resistance measurements and a look-up table.

In standard power modules, a temperature sensitive resistor or equivalent sensor is used to estimate the temperature of the semiconductor die(s). Unfortunately these sensors (e.g. thermistor) cannot be directly located to the die itself but mostly to a free space in the power module. This leads to temperature deviations between die and sensor. In many cases, the sensor shows values, more related to the temperature of the cooling fluid, instead of the die itself. Complex models are used to give a more realistic value of the die temperature, but still an estimation. Due to the big distance between sensor and die, and the good thermal coupling between sensor and cooling system, the measured value is more the one of the cooling fluid.

An object of the invention is to enhance monitoring of the cooling system of a power module or similar power electronic semiconductor device.

For achieving such object, the invention provides a monitoring method according to claim 1. A monitoring unit for conducting the monitoring method, a power electronic semiconductor device having such a monitoring unit, and an aircraft equipped therewith are the subject-matter of the further independent claims. Advantageous embodiments are subject-matters of the dependent claims.

The invention provides according to a first aspect thereof a monitoring method for monitoring a cooling system of a power electronic semiconductor device that includes the cooling system (e.g., for providing a cooling fluid, such as a cooling liquid and/or a cooling gas, especially air) and at least one semiconductor die including a power switching element, comprising:
a) measuring a first temperature by means of a temperature sensor of the power electronic semiconductor device wherein the temperature sensor is arranged in a distance to the at least one semiconductor die,
b) determining an actual junction temperature of the at least one semiconductor die as a second temperature, and
c) comparing the first and second temperatures for determining a health status of the cooling system.

Preferably step a) comprises:
a1) using a thermistor as temperature sensor.

In some embodiments, other temperature sensor technologies are used. Preferably step a) comprises:
a2) providing the temperature sensor on a circuit board of the power electronic semiconductor device.

According to a first aspect of the claimed invention, step b) comprises:
b1) measuring an actual value of an electrical temperature-dependent on-state resistance of the semiconductor die.

According to a first aspect of the claimed invention, step b) comprises:
b2) determining the actual temperature of the semiconductor die from the actual value of the on-state resistance of the semiconductor die.

According to a first aspect of the claimed invention, step b1) comprises:
b1a) measuring an actual source-drain voltage and an actual drain current of the power switching element and determining the actual on-state resistance from the measured voltage and the measured current.

Preferably step b2) comprises:
b2a) comparing the actual resistance with pre-calibrated values corresponding to temperature values.

Preferably step c) comprises:
c1) monitoring a difference between the first and second temperatures.

Preferably step c) comprises:
c2) comparing a difference between the first and second temperatures with at least one predetermined threshold.

Preferably step c) comprises:
c3) comparing a change in the difference between the first and second temperatures with a predetermined threshold for the change.

Preferably step c) comprises:
c4) determining a load of the power electronic semiconductor device and comparing a change of the first and second temperatures with a load change.

According to another aspect, the invention provides a monitoring unit for monitoring a cooling system of a power electronic semiconductor device that includes the cooling system (e.g., for providing a cooling fluid, especially a cooling liquid or a cooling gas such as air) and at least one semiconductor die including a power switching element, the monitoring unit comprising:
a temperature sensor for determining an actual first temperature of the power electronic semiconductor device wherein the temperature sensor is configured to be arranged in a distance to the at least one semiconductor die,
measuring unit for measuring an actual junction temperature of the at least one semiconductor die as an actual second temperature, and
a computing means for conducting the monitoring method according to any of the aforementioned embodiments.

According to another aspect, the invention provides a power electronic semiconductor device comprising a cooling system (e.g., for providing a cooling fluid flow such as a cooling liquid flow or a cooling gas flow, especially a cooling air flow), at least one semiconductor die including a power switching element, and such a monitoring unit.

Preferably, the power electronic semiconductor device is an electronic power switching device, a power module, a DC-to-DC converter, an inverter, or a switched-mode power supply. Preferably, the temperature sensor is an integrated temperature sensor of the power module, especially a thermistor, especially arranged in a free space in the power module.

Preferably, the power electronic semiconductor device further comprises a housing, wherein the cooling system is configured to provide a cooling fluid flow (e.g., liquid flow or gas flow, especially air flow) within the housing and the temperature sensor is in indirect contact with the cooling fluid.

According to another aspect, the invention provides an aircraft comprising such a power electronic semiconductor device or such a monitoring unit.

According to another aspect, the invention provides a computing unit configured to control the monitoring unit and/or the power electronic semiconductor device such that it carries out the monitoring method according to any of the aforementioned embodiments. According to another aspect, the invention provides a computer program with instructions for causing the device or unit to carry out such a monitoring method.

Some embodiments propose a method that allows to monitor the exact semiconductor die temperature as well as the correct operation of the cooling system that cools the power electronic module. This increases the reliability and decreases effort as only few (typically 2) additional measurement points are needed. Additionally, the power modules can be used and monitored more efficiently.

In contrast to the mentioned state of the art, preferred embodiments use a second much more accurate method to determine the temperature of the power module or the like. With both measurement sensors the correct operation of the cooling system can be verified. This saves a lot of effort and cost as the sensor effort at the cooling loop can be reduced or sensors can be used in parallel to increase reliability.

In some embodiments, the integrated temperature sensor on standard power modules is used not just for temperature estimation of the module itself, but also for concluding the health status of the cooling system. This is done by having a second temperature of the module, the junction temperature of the dies.

In some embodiments, this is done by determination of the on-state resistance of the semiconductor. The resistance of the semiconductor is strongly temperature dependent. In some embodiments, the resistance of the semiconductor is determined with help of the drain-source voltage and drain current. Both values can easily be measured during operation.

In some embodiments the measured resistance is compared with pre calibrated values, so that the exact die temperature is known.

The first temperature sensor that is used in some embodiments is the standard thermistor on the power module or the like. Due to the larger distance and no appearing losses on it, it shows more or less coolant temperature.

In some embodiments, the two temperature values are coupled by the thermal resistance between each other. For a constant heat load, this results in a constant temperature difference. In some embodiments, the constant temperature difference is predetermined in advance. In case of a cooling issue (e.g., reduced or stopped flow rate), the temperature of the die increases much faster than the one at the temperature sensor (slower temperature dispersion). This can be detected by the monitoring unit.

In some embodiments, the power in the module is calculated additionally to prevent wrong decisions due to an increased power level (that would also result in higher die temperatures).

In some embodiments, the monitoring unit has the following mode of operation:
1. In a normal operation, the first temperature T1 (from the temperature sensor) and the second temperature T2 (the temperature of the semiconductor die) show a constant temperature difference Tx = T2 - T1 that only depends on the power losses produced by the dies.
2. When the module load is changed, T1 and T2 also change with different time constants. As the delta in power is known, and a temperature change is estimated, the steady state can be awaited.
3. In case of error in the cooling system, there is also a change for T1 and T2 with different time constants but with no change in the load. Thus, the losses are constant, and there likely is an issue with cooling (e.g. to low flow rate, pressure loss, leakage) that can be detected.

Embodiments of the invention are explained below referring to the accompanying drawings in which:
- Fig. 1: a schematic view of an aircraft with an electronic device and a power module for supplying the electronic circuit with electrical power;
- Fig. 2: a top view of an embodiment of a power electronic semiconductor device including a cooling system;
- Fig. 3: a schematic block diagram of an example of a power module of a power electronic semiconductor device; and
- Fig. 4: a graphic representing the course of first and second temperatures measured in the power electronic semiconductor device.

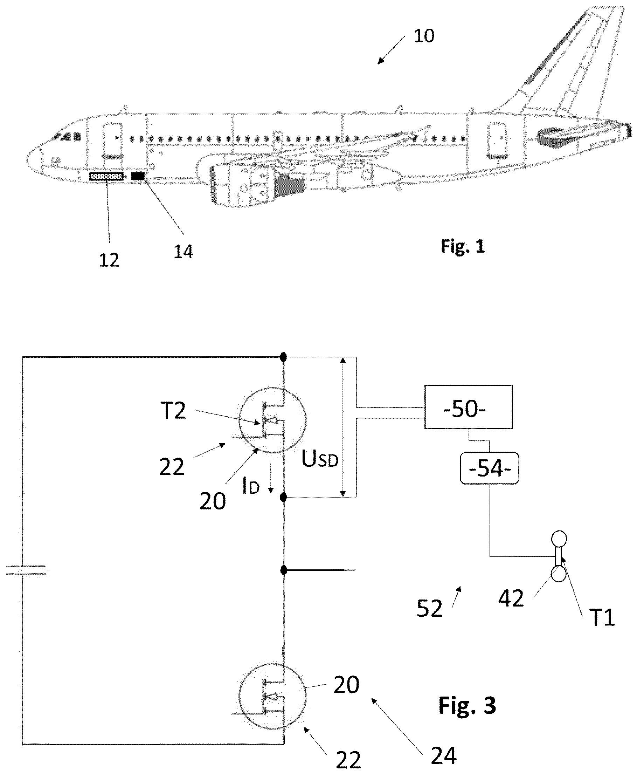

Fig. 1 shows an aircraft 10 with an electronic device 12 and a power electronic semiconductor device 14 for supplying the electronic device 12 with electrical power. The electronic device 12 can be any electronic device to be used on the aircraft 10, such as a part of a flight computer, a flight controller, an electronic instrument, a computing device, a personal computer, a communication device, a transmitter, a receiver, an electric motor, or a part of a passenger entertainment system.

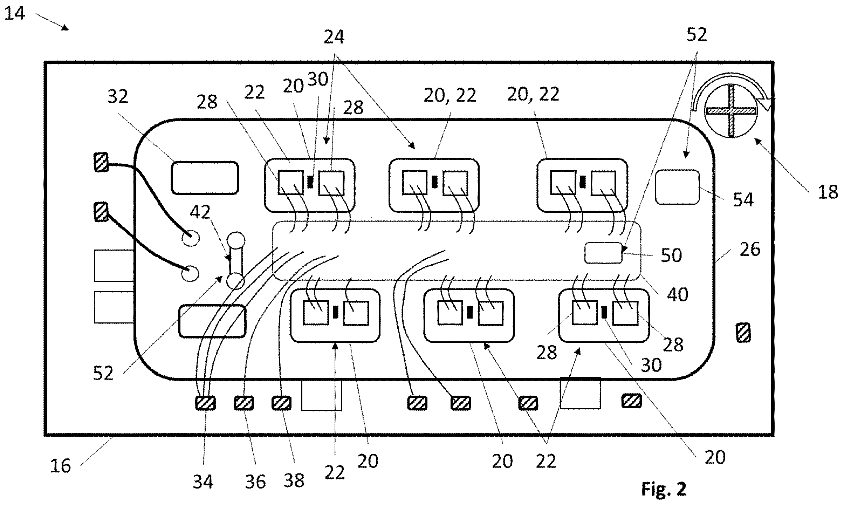

Fig. 2 shows a top view of a possible embodiment of the power electronic semiconductor device 14. The power electronic semiconductor device 14 comprises a housing 16, a cooling system 18 for providing a cooling fluid and at least one semiconductor die 20 including at least one power switching element 22, e.g., an IGBT.

In some embodiments (not shown), the power electronic semiconductor device 14 includes a DC switch. In the embodiments shown in Figs. 2 and 3, power electronic semiconductor device 14 includes one or several power modules 24, e.g. in half-bridge configuration or any other suitable configuration.

The at least one power module 24 is a power electronics for supplying adequate electrical power to the electronic device 12. The power module 24 transfers power from a DC or AC source (often mains power, e.g., AC adapter) to DC or AC loads, such as a personal computer or an electric motor, while converting voltage and current characteristics. The power module 24 has power semiconductors for high current throughput as power switching elements 22, such as MOSFETs or IGBTs. In some embodiments, the power module 24 is a switched-mode power supply (SMPS). In some embodiments, the power module 24 is a simple power module that is only a part of an DC or AC power supply, such as e.g. a SMPS or an inverter. A switched-mode power supply is an electronic power supply that incorporates a switching regulator to convert electrical power efficiently. In some embodiments, the power module 24 has a half-bridge configuration.

Referring to Fig. 2, the power electronic semiconductor device 14 includes an isolator such as a ceramic substrate 26, several of the semiconductor dies 20, here configured as IGBT dies with IGBT emitter pads 28 and an IGBT gate pad 30, a diode die 32, a power emitter pin 34, a Kelvin gate pin 36, a Kelvin emitter pin 38, a top bonded copper layer 40 (patterned), a temperature sensor 42 such as a thermistor for measuring a first temperature T1 within the housing 16, and the cooling system 18. In other embodiments, the power switching elements 22 are MOSFETs or SiC-elements.

The pins 34, 36, 38 are connected via wire bonds 44 and the copper layer 40 to the respective pads 28, 30 of the power switching elements 22. The temperature sensor 42 is arranged on a free space of the ceramic substrate 26, and hence with distance to the several semiconductor dies 20. Thus, the temperature T1 measured by the temperature sensor 42 is mainly the temperature of the cooling fluid that flows from the cooling system 18 over the semiconductor dies 20.

In the following, a method for monitoring the cooling system 18 is explained with reference to Figs. 2 and 3.

The method comprises:
a) measuring the first temperature T1 by means of the temperature sensor 42,
b) determining an actual junction temperature of the at least one semiconductor die 20 as a second temperature T2, and
c) comparing the first and second temperatures T1, T2 for determining a health status of the cooling system 18.

According to the claimed invention, step b) comprises the steps:
b1) measuring an actual value of an electrical temperature-dependent resistance of the semiconductor die 20; and
b2) determining the actual temperature T2 of the semiconductor die 20 from the actual value of the resistance of the semiconductor die 20.

In the embodiment as shown in Fig. 3, step b1) is conducted by measuring an actual source-drain voltage U_{SD} and an actual drain current I_{D} of at least one of the power switching elements 22 (e.g., configured as MOSFETs, SiC,...) and determining the actual on-state resistance from the measured voltage U_{SD} and the measured current I_{D}. In the embodiment as shown in Fig. 3, the power module 24 is connected to a measuring unit 50 that is configured to measure the actual source- drain voltage U_{SD} and the actual drain current I_{D} of at least one of the power switching elements 22 and to determine the actual temperature dependent on-state resistance from these measured values.

This works also for IGBTs, e.g., by determining the resistance from the Collector-Emitter Voltage and the Collector current.

In the embodiments as shown in Fig. 2 and 3, step b2) is conducted by comparing the actual resistance with pre-calibrated values corresponding to temperature values. In some embodiments of the method a calibrating step is conducted at least once before an operation of the power electronic semiconductor device 14, wherein the semiconductor dies 20 are brought to different predefined temperatures, and the resistance of the corresponding semiconductor die 20 at each predefined temperature is measured in order to correlate resistance values and temperature values. Thus, the junction temperature of at least one of the semiconductor dies 20 can be directly measured by determining the actual electrical resistance of the semiconductor die 20.

In some embodiments, step c) comprises at least one or several of the steps:
c1) monitoring a difference between the first and second temperatures T1, T2;
c2) comparing a difference between the first and second temperatures with at least one predetermined threshold;
c3) comparing a change in the difference between the first and second temperatures with a predetermined threshold for the change;
c4) determining a load of the power electronic semiconductor device and comparing a change of the first and second temperatures with a load change.

The two temperature values T1 and T2 are coupled by the thermal resistance between each other. For a constant heat load, this results in a constant temperature difference ΔT=T2-T1.

In case of a cooling issue (e.g. reduced or stopped flow rate), the second temperature T2 of the semiconductor die 20 increases much faster than the first temperature T1 at the temperature sensor 42 due to a slower temperature dispersion. Hence, an issue with the cooling system 18 can be detected when ΔT exceeds a predetermined threshold during a constant load.

Additionally, the power in the power module 24 is calculated. Thus, an awaited change of the temperatures T1 and T2 and of the difference ΔT due to a change in power load will not trigger a detection of an issue with the cooling system.

Referring to Fig. 2 and 3, the power semiconductor device 14 includes a monitoring unit 52 for monitoring the health status of the cooling system 18. The monitoring unit 52 comprises:
the temperature sensor 42 for measuring the actual first temperature T1 of the power electronic semiconductor device 14,
the measuring unit 50 for measuring the actual junction temperature of the at least one semiconductor die as an actual second temperature T2, and
a computing means 54 for conducting the monitoring method.

Especially, the monitoring unit 52 is configured to detect an issue of the cooling system 18 by comparing the temperatures T1 and T2, and especially by monitoring the difference ΔT and the power level of the corresponding power module 24.

In some embodiments, the monitoring unit 52 has the following mode of operation:
In a normal operation, the second temperature T2 of the semiconductor die 20 and the first temperature T1 of the temperature sensor42 show a constant temperature difference ΔT = T2 - T1 that only depends on the power losses produced by the semiconductor dies 20.

When the module load of the power module 24 is changed, T1 and T2 also change with different time constants. As the difference in power is known, and a temperature change is estimated, the steady state can be awaited.

In case of an error in the cooling system 18, there is also a change for T1 and T2 with different time constants but with no change in the load. Since there is no change in the load, the losses are constant, and there is an issue with cooling system 18 e.g., to low flow rate, pressure loss, leakage, that can be detected.

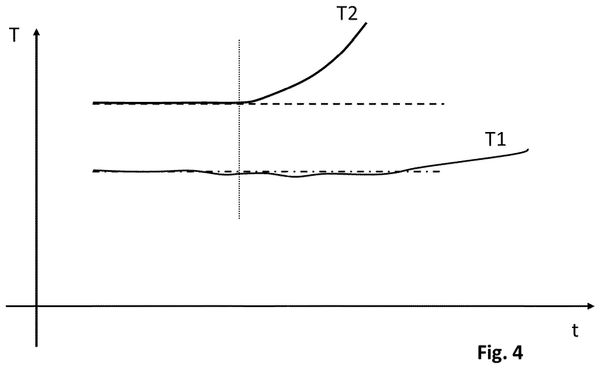

Fig. 4 shows an exemplary increase of the second temperature T2 of the semiconductor die 20 and of the first temperature T1 of the temperature sensor 42 in case of a cooling issue that starts shortly before the dotted line.

In order to enhance performance of power electronics such as a power switch or a power module, the invention provides a Monitoring method for monitoring a cooling system (18) of a power electronic semiconductor device (14) that includes the cooling system (18) (e.g., for providing a cooling fluid such as a cooling liquid or a cooling gas, especially cooling air) and at least one semiconductor die (20) including a power switching element (22), comprising:
a) measuring a first temperature (T1) by means of a temperature sensor (42) of the power electronic semiconductor device (14) wherein the temperature sensor (42) is arranged in a distance to the at least one semiconductor die (20),
b) measuring an actual junction temperature of the at least one semiconductor die (20) as a second temperature (T2), and
c) comparing the first and second temperatures (T1, T2) for determining a health status of the cooling system (18).

### Reference sign list:

- 10: aircraft
- 12: electronic device
- 14: power electronic semiconductor device
- 16: housing
- 18: cooling system
- 20: semiconductor die
- 22: power switching element
- 24: power module
- 26: ceramic substrate
- 28: IGBT emitter pad
- 30: IGBT gate pad
- 32: diode die
- 34: power emitter pin
- 36: Kelvin emitter pin
- 38: Kelvin gate pin
- 40: copper layer (patterned)
- 42: temperature sensor
- 44: wire bond
- 50: measuring unit
- 52: monitoring unit
- 54: computing unit
- U_{SD}: source-drain voltage
- I_{D}: drain current
- T1: first temperature
- T2: second temperature
- T: temperature
- t: time

## Claims

1. Monitoring method for monitoring a cooling system (18) of a power electronic semiconductor device (14) that includes the cooling system (18) and at least one semiconductor die (20) including a power switching element (22), comprising:
a) measuring a first temperature (T1) by means of a temperature sensor (42) of the power electronic semiconductor device (14) wherein the temperature sensor (42) is arranged in a distance to the at least one semiconductor die (20),
b) determining an actual junction temperature of the at least one semiconductor die (20) as a second temperature (T2), and
c) comparing the first and second temperatures (T1, T2) for determining a health status of the cooling system (18),
wherein step b) comprises the steps:
b1) measuring an actual value of an electrical temperature-dependent on-state resistance of the semiconductor die (20); and
b2) determining the actual junction temperature of the semiconductor die (20) from the actual value of the on-state resistance of the semiconductor die (20),
wherein step b1) comprises:
b1a) measuring an actual source-drain voltage (U_{SD}) and an actual drain current (I_{D}) of the power switching element and determining the actual on-state resistance from the measured voltage (U_{SD}) and the measured current (I_{D}).

2. Monitoring method according to claim 1, wherein step a) comprises at least one or several of the steps:
a1) using a thermistor as temperature sensor (42);
a2) providing the temperature sensor (42) on a circuit board (26) of the power electronic semiconductor device (14).

3. Monitoring method according to claim 2, wherein step b2) comprises:
b2a) comparing the actual on-state resistance with pre-calibrated values corresponding to temperature values.

4. Monitoring method according to any of the preceding claims, wherein step c) comprises at least one or several of the steps:
c1) monitoring a difference between the first and second temperatures (T1, T2);
c2) comparing a difference between the first and second temperatures (T1, T2) with at least one predetermined threshold;
c3) comparing a change in the difference between the first and second temperatures (T1, T2) with a predetermined threshold for the change;
c4) determining a load of the power electronic semiconductor device (14) and comparing a change of the first and second temperatures (T1, T2) with a load change.

5. Monitoring unit (52) for monitoring a cooling system (18) of a power electronic semiconductor device (14) that includes the cooling system (18) and at least one semiconductor die (20) including a power switching element (22), the monitoring unit (52) comprising:
a temperature sensor (42) for measuring an actual first temperature (T1) of the power electronic semiconductor device (14) wherein the temperature sensor (42) is configured to be arranged in a distance to the at least one semiconductor die (20),
a measuring unit (50) for determining an actual junction temperature of the at least one semiconductor die (20) as an actual second temperature (T2), and
a computing unit (54) configured to compare the first and second temperatures (T1, T2) for determining a health status of the cooling system (18), configured to conduct the monitoring method according to any of the claims 1 to 4.

6. Power electronic semiconductor device (14) comprising a cooling system (18), at least one semiconductor die (20) including a power switching element (22), and a monitoring unit according to claim 5.

7. Power electronic semiconductor device (14) according to claim 6, further comprising a housing (16), wherein the cooling system (18) is configured to provide a cooling fluid flow within the housing (16) and the temperature sensor (42) is in indirect contact with the cooling fluid.

8. Aircraft (10) comprising a power electronic semiconductor device (14) according to any of the claims 6 or 7 and/or a monitoring unit according to any of the claims 5.

9. Computing unit (54) for a monitoring unit (52) according to claim 5, configured to control the monitoring unit (52) to conduct the monitoring method according to any of the claims 1 to 4.

10. Computer program comprising instructions to cause the power electronic semiconductor device (14) of any of the claims 7 or 8 or the monitoring unit (52) according to claim 5 to execute the steps of the method of any of the claims 1 to 4.

## Patentansprüche

1. **Überwachungsverfahren** zum Überwachen eines Kühlsystems (18) einer leistungselektronischen Halbleitervorrichtung (14), die das Kühlsystem (18) und mindestens einen Halbleiterchip (20) beinhaltet, der ein Leistungsschaltelement (22) beinhaltet, umfassend:
a) Messen einer ersten Temperatur (T1) mittels eines Temperatursensors (42) der leistungselektronischen Halbleitervorrichtung (14), wobei der Temperatursensor (42) in einem Abstand zu dem mindestens einen Halbleiterchip (20) angeordnet ist,
b) Bestimmen einer tatsächlichen Sperrschichttemperatur des mindestens einen Halbleiterchips (20) als eine zweite Temperatur (T2), und
c) Vergleichen der ersten und der zweiten Temperatur (T1, T2) zum Bestimmen eines Gesundheitszustands des Kühlsystems (18), ⁴wobei Schritt b) die folgenden Schritte umfasst:
b1) Messen eines tatsächlichen Wertes eines elektrischen temperaturabhängigen Ein-Widerstands des Halbleiterchips (20); und
b2) Bestimmen der tatsächlichen Sperrschichttemperatur des Halbleiterchips (20) aus dem tatsächlichen Wert des Ein-Widerstands des Halbleiterchips (20),
wobei Schritt b1) umfasst:
b1a) Messen einer tatsächlichen Source-Drain-Spannung (U_{SD}) und eines tatsächlichen Drain-Stroms (I_{D}) des Leistungsschaltelements und Bestimmen des tatsächlichen Ein-Widerstands aus der gemessenen Spannung (U_{SD}) und dem gemessenen Strom (I_{D}).

2. Überwachungsverfahren nach Anspruch 1, wobei Schritt a) mindestens einen oder mehrere der folgenden Schritte umfasst:
a1) Verwenden eines Thermistors als Temperatursensor (42);
a2) Vorsehen des Temperatursensors (42) auf einer Leiterplatte (26) der leistungselektronischen Halbleitervorrichtung (14).

3. Überwachungsverfahren nach Anspruch 2, wobei Schritt b2) umfasst:
b2a) Vergleichen des tatsächlichen Ein-Widerstands mit vorkalibrierten Werten, die Temperaturwerten entsprechen.

4. Überwachungsverfahren nach einem der vorhergehenden Ansprüche, wobei Schritt c) mindestens einen oder mehrere der folgenden Schritte umfasst:
c1) Überwachen einer Differenz zwischen der ersten und der zweiten Temperatur (T1, T2);
c2) Vergleichen einer Differenz zwischen der ersten und der zweiten Temperatur (T1, T2) mit mindestens einem vorbestimmten Schwellenwert;
c3) Vergleichen einer Änderung der Differenz zwischen der ersten und der zweiten Temperatur (T1, T2) mit einem vorbestimmten Schwellenwert für die Änderung;
c4) Bestimmen einer Last der leistungselektronischen Halbleitervorrichtung (14) und Vergleichen einer Änderung der ersten und der zweiten Temperatur (T1, T2) mit einer Laständerung.

5. Überwachungseinheit (52) zum Überwachen eines Kühlsystems (18) einer leistungselektronischen Halbleitervorrichtung (14), die das Kühlsystem (18) und mindestens einen Halbleiterchip (20) beinhaltet, der ein Leistungsschaltelement (22) beinhaltet, wobei die Überwachungseinheit (52) Folgendes umfasst:
einen Temperatursensor (42) zum Messen einer tatsächlichen ersten Temperatur (T1) der leistungselektronischen Halbleitervorrichtung (14), wobei der Temperatursensor (42) dazu konfiguriert ist, in einem Abstand zu dem mindestens einen Halbleiterchip (20) angeordnet zu werden,
eine Messeinheit (50) zum Bestimmen einer tatsächlichen Sperrschichttemperatur des mindestens einen Halbleiterchips (20) als eine tatsächliche zweite Temperatur (T2), und
eine Recheneinheit (54), die dazu konfiguriert ist, die erste und die zweite Temperatur (T1, T2) zum Bestimmen eines Gesundheitszustands des Kühlsystems (18) zu vergleichen, und dazu konfiguriert ist, das Überwachungsverfahren nach einem der Ansprüche 1 bis 4 durchzuführen.

6. Leistungselektronische Halbleitervorrichtung (14), umfassend ein Kühlsystem (18), mindestens einen Halbleiterchip (20), der ein Leistungsschaltelement (22) beinhaltet, und eine Überwachungseinheit nach Anspruch 5.

7. Leistungselektronische Halbleitervorrichtung (14) nach Anspruch 6, ferner umfassend ein Gehäuse (16), wobei das Kühlsystem (18) dazu konfiguriert ist, einen Kühlfluidstrom innerhalb des Gehäuses (16) bereitzustellen, und der Temperatursensor (42) in indirektem Kontakt mit dem Kühlfluid steht.

8. Luftfahrzeug (10), umfassend eine leistungselektronische Halbleitervorrichtung (14) nach einem der Ansprüche 6 oder 7 und/oder eine Überwachungseinheit nach Anspruch 5.

9. Recheneinheit (54) für eine Überwachungseinheit (52) nach Anspruch 5, die dazu konfiguriert ist, die Überwachungseinheit (52) zu steuern, um das Überwachungsverfahren nach einem der Ansprüche 1 bis 4 durchzuführen.

10. Computerprogramm, umfassend Anweisungen, um die leistungselektronische Halbleitervorrichtung (14) nach einem der Ansprüche 7 oder 8 oder die Überwachungseinheit (52) nach Anspruch 5 zu veranlassen, die Schritte des Verfahrens nach einem der Ansprüche 1 bis 4 auszuführen.

## Revendications

1. Procédé de surveillance pour surveiller un système de refroidissement (18) d'un dispositif semi-conducteur d'électronique de puissance (14) qui inclut le système de refroidissement (18) et au moins une puce à semi-conducteur (20) incluant un élément de commutation de puissance (22), comprenant :
a) mesurer une première température (T1) au moyen d'un capteur de température (42) du dispositif semi-conducteur d'électronique de puissance (14), dans lequel le capteur de température (42) est agencé à une distance de l'au moins une puce à semi-conducteur (20),
b) déterminer une température de jonction réelle de l'au moins une puce à semi-conducteur (20) en tant que seconde température (T2), et
c) comparer les première et seconde températures (T1, T2) pour déterminer un état de santé du système de refroidissement (18),
dans lequel l'étape b) comprend les étapes suivantes:
b1) mesurer une valeur réelle d'une résistance à l'état passant dépendante de la température de la puce à semi-conducteur (20); et
b2) déterminer la température de jonction réelle de la puce à semi-conducteur (20) à partir de la valeur réelle de la résistance à l'état passant de la puce à semi-conducteur (20),
dans lequel l'étape b1) comprend :
b1a) mesurer une tension source-drain réelle (Uso) et un courant de drain réel (I_{D}) de l'élément de commutation de puissance et déterminer la résistance à l'état passant réelle à partir de la tension mesurée (Uso) et du courant mesuré (I_{D}).

2. Procédé de surveillance selon la revendication 1, dans lequel l'étape a) comprend au moins l'une ou plusieurs des étapes suivantes:
a1) utiliser une thermistance en tant que capteur de température (42);
a2) prévoir le capteur de température (42) sur une carte de circuit imprimé (26) du dispositif semi-conducteur d'électronique de puissance (14).

3. Procédé de surveillance selon la revendication 2, dans lequel l'étape b2) comprend:
b2a) comparer la résistance à l'état passant réelle avec des valeurs pré-calibrées correspondant à des valeurs de température.

4. Procédé de surveillance selon l'une quelconque des revendications précédentes, dans lequel l'étape c) comprend au moins l'une ou plusieurs des étapes suivantes:
c1) surveiller une différence entre les première et seconde températures (T1, T2);
c2) comparer une différence entre les première et seconde températures (T1, T2) avec au moins un seuil prédéterminé;
c3) comparer un changement dans la différence entre les première et seconde températures (T1, T2) avec un seuil prédéterminé pour le changement;
c4) déterminer une charge du dispositif semi-conducteur d'électronique de puissance (14) et comparer un changement des première et seconde températures (T1, T2) avec un changement de charge.

5. Unité de surveillance (52) pour surveiller un système de refroidissement (18) d'un dispositif semi-conducteur d'électronique de puissance (14) qui inclut le système de refroidissement (18) et au moins une puce à semi-conducteur (20) incluant un élément de commutation de puissance (22), l'unité de surveillance (52) comprenant :
un capteur de température (42) pour mesurer une première température réelle (T1) du dispositif semi-conducteur d'électronique de puissance (14), dans laquelle le capteur de température (42) est configuré pour être agencé à une distance de l'au moins une puce à semi-conducteur (20),
une unité de mesure (50) pour déterminer une température de jonction réelle de l'au moins une puce à semi-conducteur (20) en tant que seconde température réelle (T2), et
une unité de calcul (54) configurée pour comparer les première et seconde températures (T1, T2) pour déterminer un état de santé du système de refroidissement (18), configurée pour mettre en œuvre le procédé de surveillance selon l'une quelconque des revendications 1 à 4.

6. Dispositif semi-conducteur d'électronique de puissance (14) comprenant un système de refroidissement (18), au moins une puce à semi-conducteur (20) incluant un élément de commutation de puissance (22), et une unité de surveillance selon la revendication 5.

7. Dispositif semi-conducteur d'électronique de puissance (14) selon la revendication 6, comprenant en outre un boîtier (16), dans lequel le système de refroidissement (18) est configuré pour fournir un écoulement de fluide de refroidissement à l'intérieur du boîtier (16) et le capteur de température (42) est en contact indirect avec le fluide de refroidissement.

8. Aéronef (10) comprenant un dispositif semi-conducteur d'électronique de puissance (14) selon l'une quelconque des revendications 6 ou 7 et/ou une unité de surveillance selon la revendication 5.

9. Unité de calcul (54) pour une unité de surveillance (52) selon la revendication 5, configurée pour commander l'unité de surveillance (52) pour mettre en œuvre le procédé de surveillance selon l'une quelconque des revendications 1 à 4.

10. Programme d'ordinateur comprenant des instructions pour amener le dispositif semi-conducteur d'électronique de puissance (14) de l'une quelconque des revendications 7 ou 8 ou l'unité de surveillance (52) selon la revendication 5 à exécuter les étapes du procédé de l'une quelconque des revendications 1 à 4.
